# FASCICULE DE BREVET EUROPEEN

(11) **EP 2 441 676 B1**
(45) Date de publication et mention de la délivrance du brevet: **22.05.2013**
(21) Numéro de dépôt: 11306334.1
(22) Date de dépôt: 14.10.2011
(51) Int. Cl.: B64D 33/02

(54) **Nacelle d'aéronef incorporant une zone de jonction continue entre une paroi extérieure et un cadre avant et procédé de réalisation.**
Luftfahrzeuggondel, die eine fortlaufende Verbindungszone zwischen einer Außenwand und einem Vorderrahmen umfasst und Herstellungsverfahren
Aircraft nacelle including a continuous joining area between an outer wall and a front frame and fabrication method

(30) Priorité: 15.10.2010 FR 1058436
(43) Date de publication de la demande: 18.04.2012
(73) Titulaire: Airbus Opérations SAS, 31060 Toulouse (FR)
(72) Inventeur: Porte, Alain, 31770 Colomiers (FR); Chelin, Frédéric, 32430 Encausse (FR)
(74) Mandataire: Fantin, Laurent

(56) Documents cités:
- FR-A1- 2 698 910
- FR-A1- 2 904 604
- FR-A1- 2 932 106

## Description

La présente invention se rapporte à une nacelle d'aéronef incorporant une zone de jonction continue entre une paroi extérieure et un cadre avant.

Un ensemble propulsif d'aéronef comprend une nacelle dans laquelle est disposée de manière sensiblement concentrique une motorisation.

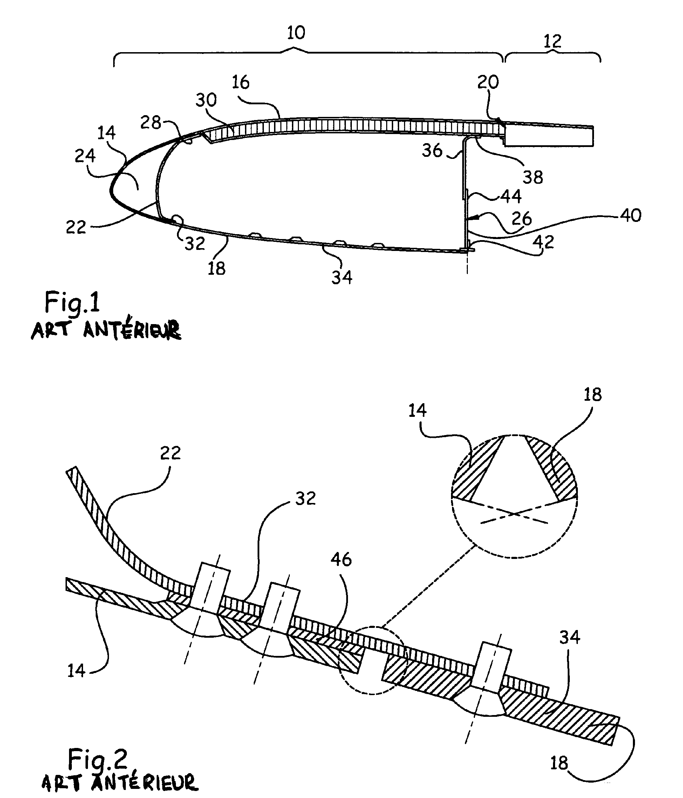

Comme illustré sur la figure 1, la nacelle comprend à l'avant une entrée d'air 10 permettant de canaliser un flux d'air en direction de la motorisation 12, une première partie du flux d'air entrant, appelée flux primaire, traversant la motorisation pour participer à la combustion, la seconde partie du flux d'air, appelée flux secondaire, étant entrainée par une soufflante et s'écoulant dans un conduit annulaire délimité par la paroi intérieure de la nacelle et la paroi extérieure de la motorisation.

L'entrée d'air 10 comprend une lèvre 14 dont la surface en contact avec les flux aérodynamiques est prolongée à l'intérieur de la nacelle par une paroi intérieure 16 délimitant un conduit et à l'extérieur de la nacelle par une paroi extérieure 18.

L'entrée d'air 10 est reliée à la motorisation 12 au niveau d'une surface de jonction 20 par tous moyens appropriés. La surface de jonction 20 est sensiblement plane et perpendiculaire à l'axe longitudinal d la nacelle.

Sur le plan structurel, l'entrée d'air 10 comprend un premier cadre dit cadre avant 22 reliant la paroi intérieure 16 et la paroi extérieure 18 délimitant avec la lèvre 14 un conduit annulaire 24 et un second cadre dit cadre arrière 26 reliant la paroi intérieure 16 et la paroi extérieure 18 à proximité de la surface de jonction 20 de la motorisation.

Selon un mode de réalisation, le cadre avant 22 comprend au niveau de la paroi intérieure un bord 28 recourbé vers l'arrière de la nacelle contre lequel sont plaqués un bord d'un panneau formant la lèvre 14 et un bord d'un autre panneau 30 formant la paroi intérieure 16, lesdits bords étant mis bout à bout. Avantageusement, le panneau 30 assure le traitement acoustique et comprend une structure alvéolaire lui conférant une certaine rigidité.

En complément, le cadre avant 22 comprend au niveau de la paroi extérieure 18 un bord 32 recourbé vers l'arrière de la nacelle contre lequel est plaquée au moins une partie du panneau formant la lèvre. La paroi extérieure 18 est formée par un panneau 34 indépendant du panneau formant la lèvre 14. Dans ce cas, les bords adjacents du panneau 34 et du panneau formant la lèvre 14 sont mis bout à bout et plaqués contre le bord recourbé 32. Le panneau formant la lèvre 14 est généralement métallique pour être compatible avec un système pour traiter le givre ou la glace utilisant de l'air chaud prévu au niveau de l'entrée d'air et le panneau 34 en matériau composite pour réduire la masse embarquée. Concernant le cadre arrière, ce dernier assure la reprise des efforts de flexion, de rotation ou autres qui s'appliquent sur l'entrée d'air tels que par exemple, le poids de l'entrée d'air, les efforts induits par les écoulements aérodynamiques. Ce cadre arrière 26 est disposé dans un plan sensiblement perpendiculaire à la direction longitudinale de la nacelle.

Un cadre arrière est notamment décrit dans le document FR-2.904.604.

Il comprend un premier anneau métallique 36, notamment en titane qui s'étend sur toute la périphérie et qui comprend au niveau de son diamètre le plus petit un rebord 38 contre lequel peut prendre appui la paroi intérieure 16 fixée audit rebord 38 par tous moyens appropriés. Le cadre arrière 26 comprend un second anneau 40 dont le diamètre extérieur est relié par tous moyens appropriés à la paroi extérieure 18. Selon l'exemple illustré, le second anneau 40 est relié à la paroi extérieure 18 par l'intermédiaire d'une pièce intercalaire 42 périphérique avec une section en T, ledit second anneau 40 étant relié au niveau du pied de la pièce intercalaire en T, la tête du T servant d'appui à la paroi extérieure 18.

Le premier anneau 36 comprend au niveau de son bord périphérique extérieur une zone de chevauchement avec le bord périphérique intérieur du second anneau 40, les deux anneaux étant reliés par tous moyens appropriés au niveau de cette zone de chevauchement 44.

Au niveau de la paroi extérieure, le ou les panneaux formant la lèvre 14, le ou les panneaux formant la paroi extérieure 18 et le ou les panneaux délimitant la surface extérieure de la nacelle après le cadre arrière sont reliés au cadre avant ou au cadre arrière par des moyens de liaison appropriés comme par exemple des rivets. Pour réduire l'influence sur la traînée, ces différents panneaux sont mis bout à bout et ne se chevauchent pas.

Même s'il est possible d'adapter les épaisseurs des panneaux mis bout à bout grâce à des cales 46, pelables ou usinables, le défaut de continuité de surface entre les surfaces extérieures des panneaux mis bout à bout ne peut pas être corrigé. Ce défaut au niveau de la jonction des panneaux de la surface extérieure 18 et de la lèvre 14 génère des perturbations qui tendent à augmenter la traînée et par conséquence la consommation énergétique de l'aéronef.

Le document FR-2.932.106 propose une solution visant à résoudre cette problématique qui consiste à réaliser une rainure de faible profondeur par rapport à la surface continue théorique, qui s'étend sur une largeur telle que les surfaces extérieures des panneaux mis bout à bout ne viennent plus en saillie par rapport à la surface théorique et à déposer un revêtement dans la rainure de manière à la combler.

Le document FR-2.698.910 montre une nacelle avec toutes les caractéristiques du préambule de la revendication 1.

La présente invention vise à proposer une alternative qui permet de réduire les temps d'assemblage des éléments formant une entrée d'air et de limiter l'impact des zones de jonction sur l'aérodynamisme.

A cet effet, l'invention a pour objet une nacelle d'aéronef comprenant d'une part une lèvre prolongée à l'intérieur de la nacelle par une paroi intérieure délimitant un conduit débouchant au niveau d'une motorisation et à l'extérieur de la nacelle par une paroi extérieure, et d'autre part, un premier cadre dit cadre avant reliant la paroi intérieure et la paroi extérieure délimitant avec la lèvre un conduit annulaire et un second cadre dit cadre arrière reliant la paroi intérieure et la paroi extérieure à proximité de la motorisation, caractérisé en ce qu'elle comprend au moins une zone de jonction avec, au niveau d'au moins une section de la nacelle selon un plan contenant l'axe longitudinal de la nacelle, un élément qui constitue au moins une partie de la paroi extérieure et au moins une partie du cadre avant et qui comprend un décrochement dont les formes sont adaptées pour recevoir un panneau formant la lèvre.

L'invention a aussi pour objet un procédé de realisation d'un élément pour une nacelle d'aéronef, comme définie par la revendication 8.

D'autres caractéristiques et avantages ressortiront de la description qui va suivre de l'invention, description donnée à titre d'exemple uniquement, en regard des dessins annexés sur lesquels :
- La figure 1 est une coupe d'une entrée d'air d'une nacelle d'aéronef selon l'art antérieur,
- La figure 2 est une coupe illustrant en détails la zone de jonction de deux panneaux mis bout à bout formant la paroi extérieure d'une nacelle d'aéronef selon l'art antérieur,
- La figure 3 est une coupe d'une entrée d'air d'une nacelle d'aéronef selon une variante de l'invention,
- La figure 4 est une coupe d'une entrée d'air d'une nacelle d'aéronef selon une autre variante de l'invention,
- La figure 5 est une coupe illustrant en détails la zone de jonction des éléments formant la paroi extérieure d'une nacelle d'aéronef selon la variante de l'invention illustrée sur la figure 4, et
- La figure 6 est une coupe illustrant un moule permettant de réaliser une paroi extérieure selon la variante de l'invention illustrée sur la figure 4.

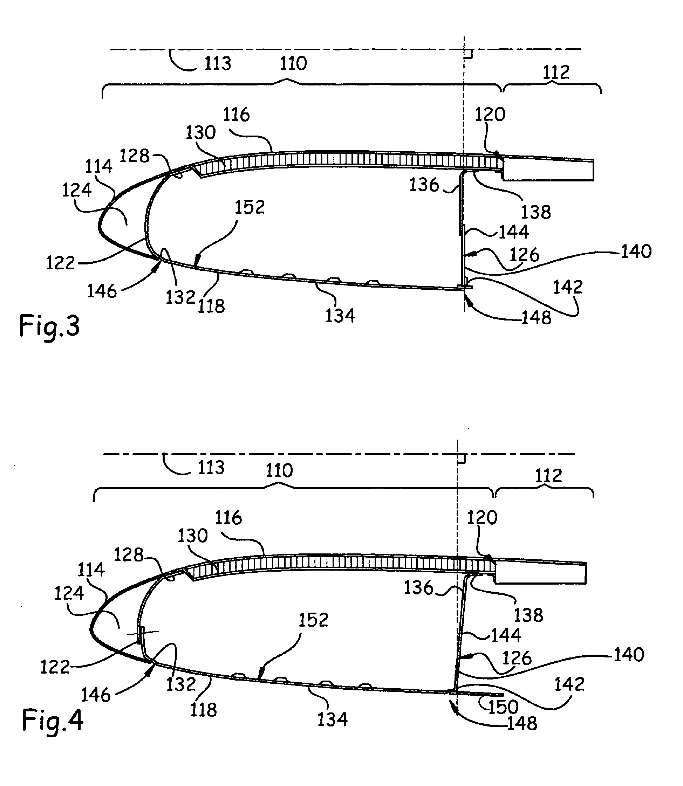

Sur les figures 3 à 5, on a représenté une nacelle avec à l'avant une entrée d'air 110 permettant de canaliser un flux d'air en direction d'une motorisation 112, une première partie du flux d'air entrant, appelée flux primaire, traversant la motorisation pour participer à la combustion, la seconde partie du flux d'air, appelée flux secondaire, étant entrainée par une soufflante et s'écoulant dans un conduit annulaire délimité par la paroi intérieure de la nacelle et la paroi extérieure de la motorisation. Pour la suite de la description, l'axe longitudinal 113 de la nacelle correspond à l'axe de rotation de la motorisation.

L'entrée d'air 110 comprend une lèvre 114 dont la surface en contact avec les flux aérodynamiques est prolongée à l'intérieur de la nacelle par une paroi intérieure 116 délimitant un conduit et à l'extérieur de la nacelle par une paroi extérieure 118.

L'entrée d'air 110 est reliée à la motorisation 112 au niveau d'une zone de jonction 120 par tous moyens appropriés.

Sur le plan structurel, l'entrée d'air 110 comprend un premier cadre dit cadre avant 122 reliant la paroi intérieure 116 et la paroi extérieure 118 délimitant avec la lèvre 114 un conduit annulaire 124 et un second cadre dit cadre arrière 126 reliant la paroi intérieure 116 et la paroi extérieure 118 à proximité de la surface de jonction 120 de la motorisation.

Ces cadres 122 et 126 peuvent comprendre chacun au moins une ouverture pour permettre le passage d'un conduit prévu pour alimenter en air chaud un système de traitement du givre au niveau de la lèvre.

La motorisation 112, la paroi intérieure 118, la lèvre 114 ne sont pas plus détaillées car elles sont connues de l'homme du métier et peuvent par exemple être conformes à l'art antérieur.

Selon un mode de réalisation illustré sur la figure 3, le cadre avant 122 comprend au niveau de la paroi intérieure 116 un bord 128 recourbé vers l'arrière de la nacelle contre lequel sont plaqués un bord d'un panneau formant la lèvre 114 et un bord d'un autre panneau 130 formant la paroi intérieure 116, lesdits bords étant mis bout à bout. Avantageusement, le panneau 130 assure un traitement acoustique et comprend une structure alvéolaire lui conférant une certaine rigidité.

La paroi extérieure 118 est formée par un panneau 134 indépendant du panneau formant la lèvre 114.

Le panneau formant la lèvre 114 est généralement métallique pour être compatible avec un système pour traiter le givre ou la glace utilisant de l'air chaud prévu au niveau de l'entrée d'air.

Selon un mode de réalisation illustré sur la figure 3, le cadre arrière 126 comprend un premier anneau métallique 136, notamment en titane, qui comprend au niveau de son diamètre le plus petit un bord 138 recourbé contre lequel peut prendre appui la paroi intérieure 116 fixée audit bord recourbé 138 par tous moyens appropriés. Avantageusement, le bord recourbé 138 a une extrémité orientée vers l'arrière de la nacelle.

En complément, le cadre arrière comprend un second anneau 140 dont le diamètre extérieur est relié par tous moyens appropriés à la paroi extérieure 118.

Selon un mode de réalisation illustré sur la figure 3, le second anneau 140 peut être relié à la paroi extérieure 118 par l'intermédiaire d'une pièce intercalaire 142 périphérique avec une section en T, ledit second anneau 140 étant relié au niveau du pied de la pièce intercalaire en T, la tête du T servant d'appui à la paroi extérieure 118.

Le premier anneau 136 comprend au niveau de son bord périphérique extérieur une zone de chevauchement 144 avec le bord périphérique intérieur du second anneau 140, les deux anneaux étant reliés par tous moyens appropriés au niveau de cette zone de chevauchement 144.

Ce second anneau 140 est de préférence réalisé en matériau composite.

Selon un autre mode de réalisation, le cadre arrière peut être réalisé d'un seul tenant en matériau composite.

La paroi extérieure comprend au niveau de la paroi extérieure 118 deux zones de jonction 146 et 148, une première zone de jonction 146 entre le cadre avant 122, le ou les panneaux formant la lèvre 114 et le ou les panneau(x) formant la paroi extérieure 118 et une seconde zone de jonction 148 entre le cadre arrière 126, le ou les panneaux formant la paroi extérieure 118 et un ou des panneaux 150 situé(s) au droit de la motorisation 112, assurant le prolongement de la paroi extérieure 118 et comportant éventuellement des portions articulées pour permettre l'accès à ladite motorisation 112.

Selon l'invention, au moins la zone de jonction 146 comprend, au niveau d'au moins une section de la nacelle selon un plan contenant l'axe longitudinal 113 de la nacelle, un élément 152 d'un seul tenant qui constitue au moins une partie de la paroi extérieure 118 et au moins une partie du cadre avant 122 et comprend un décrochement 154 dont les formes sont adaptées pour recevoir le panneau formant la lèvre 114. Avantageusement, l'élément 152 forme au moins une partie du cadre arrière 126 et comprend un décrochement 154 dont les formes sont adaptées pour recevoir le panneau 150 situé au droit de la motorisation. Ainsi, la hauteur du décrochement 154 correspond à l'épaisseur du panneau formant la lèvre ou du panneau 150 situé au droit de la motorisation. Cet agencement permet d'améliorer la continuité des surfaces à contact avec les flux s'écoulant à l'extérieur de la nacelle et de réduire l'impact de la zone de jonction sur l'aérodynamisme car le même élément 152 comprend au niveau de la zone de jonction une surface dont une partie est contact avec les flux s'écoulant à l'extérieur de la nacelle et une autre partie sert de surface d'appui au panneau à assembler. Selon un autre aspect, le décrochement 154 étant adapté à l'épaisseur du panneau à assembler, il n'est plus nécessaire de prévoir des cales au moment du montage ce qui tend à réduire le temps nécessaire pour l'assemblage.

Ainsi, l'élément 152 comprend au moins une surface susceptible d'être en contact avec les flux s'écoulant à l'extérieur de la nacelle. De plus, une partie de l'élément 152 s'étend selon une direction sécante avec l'axe longitudinal 113 sur une hauteur correspondant à au moins 10% du cadre avant et éventuellement du cadre arrière.

L'élément 152 peut s'étendre sur toute la circonférence ou peut comprendre plusieurs secteurs angulaires mis bout à bout selon la circonférence, chaque secteur angulaire étant réalisé d'un seul tenant selon la direction longitudinale. Avantageusement, l'élément 152 s'étend du cadre avant 122 au cadre arrière 126 de manière à ne pas générer de zone de jonction au niveau de la surface extérieure de la nacelle.

Selon un mode de réalisation illustré sur la figure 3, l'élément 152 forme le cadre avant 122 et s'étend jusqu'au conduit intérieur 116, son bord amont étend recourbé de manière à servir d'appui aux panneaux formant la lèvre 114 et à ceux formant le conduit intérieur 116. Il s'étend également sur toute la longueur de la paroi extérieure 118 et son bord aval est solidarisé au cadre arrière 126 de la même manière que pour l'art antérieur par exemple.

Selon l'exemple illustré sur la figure 4, l'élément 152 pourrait former tout le cadre arrière 126 et s'étendre jusqu'à la paroi intérieure 116 au niveau du cadre arrière.

Selon un mode de réalisation illustré sur la figure 4, l'élément 152 forme une partie du cadre avant 122, s'étend également sur toute la longueur de la paroi extérieure 118 et forme tout le cadre arrière 126 et s'étend jusqu'à la paroi intérieure 116.

Selon une variante non représentée, l'élément 152 pourrait ne former qu'une partie du cadre arrière 126.

De préférence, l'élément 152 comprend des raidisseurs, par exemple des raidisseurs 156 dans des plans contenant l'axe longitudinal 113 et/ou des raidisseurs 158 s'étendant dans des plans transversaux (perpendiculaires à l'axe longitudinal 113).

Selon une autre caractéristique de l'invention, l'élément 152 est réalisé en matériau composite.

De préférence, l'élément 152 est obtenu par drappage de plis de fibres sur un moule 160 dont la surface est conforme à la surface de l'élément 152 susceptible d'être en contact avec les flux s'écoulant à l'extérieur de la nacelle.

Selon l'invention, ce moule 160 comprend au moins une forme en saillie formant une marche 162 qui correspond au décrochement 154 et dont la hauteur H est adaptée à l'épaisseur du panneau qui sera assemblé ultérieurement au niveau de ladite zone de jonction.

Pour faciliter le démoulage, la partie de l'élément 152 formant une partie du cadre avant 122 forme un angle supérieur à 90° avec la partie de l'élément 152 formant la paroi extérieure 118. De même, la partie de l'élément 152 formant une partie du cadre arrière 126 forme un angle supérieur à 90° avec la partie de l'élément 152 formant la paroi extérieure 118.

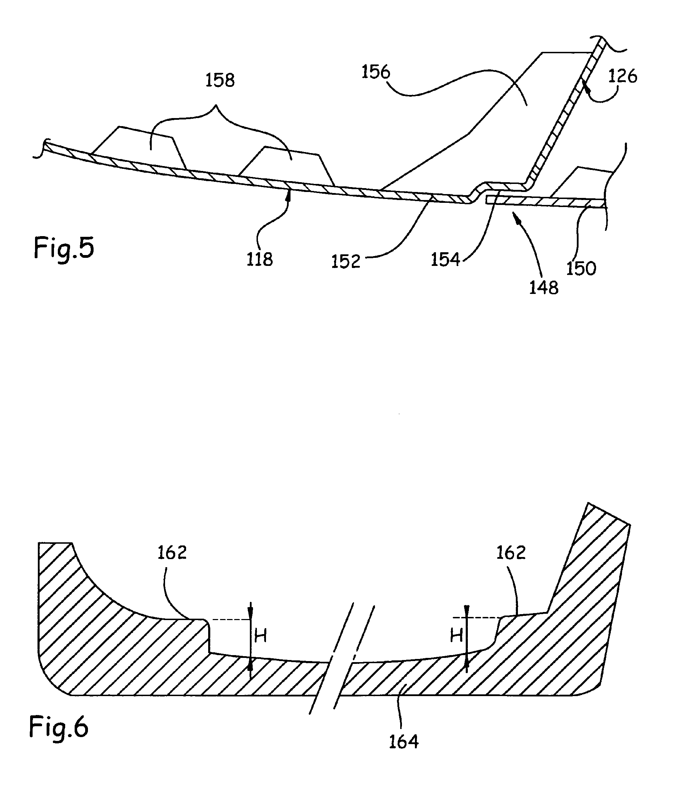

Sur la figure 6, on a représenté un moule 160 pour réaliser un élément 152 selon la variante illustrée sur la figure 4 qui comprend deux marches 162, une pour chaque zone de jonction.

## Revendications

1. Nacelle d'aéronef comprenant d'une part une lèvre (114) prolongée à l'intérieur de la nacelle par une paroi intérieure (116) délimitant un conduit débouchant au niveau d'une motorisation (112) et à l'extérieur de la nacelle par une paroi extérieure (118), et d'autre part, un premier cadre dit cadre avant (122) reliant la paroi intérieure (116) et la paroi extérieure (118) délimitant avec la lèvre (114) un conduit annulaire (124) et un second cadre dit cadre arrière (126) reliant la paroi intérieure (116) et la paroi extérieure (118) à proximité de la motorisation (112), **caractérisé en ce qu'**elle comprend au moins une zone de jonction (146, 148) avec, au niveau d'au moins une section de la nacelle selon un plan contenant l'axe longitudinal (113) de la nacelle, un élément (152) qui constitue au moins une partie de la paroi extérieure (118) et au moins une partie du cadre avant (122) et qui comprend un décrochement (154) dont les formes sont adaptées pour recevoir un panneau formant la lèvre (114).

2. Nacelle d'aéronef selon la revendication 1, **caractérisée en ce qu'**une partie de l'élément (152) constitue une partie du cadre arrière (126) et comprend un décrochement (154) dont les formes sont adaptées pour recevoir un panneau situé au droit de la motorisation au niveau de la paroi extérieure.

3. Nacelle d'aéronef selon la revendication 1 ou 2, **caractérisée en ce qu'**une partie de l'élément (152) s'étend selon une direction sécante avec l'axe longitudinal (113) de la nacelle, sur une hauteur correspondant à au moins 10% d'au moins un des deux cadres (122,126).

4. Nacelle d'aéronef selon la revendication 2 ou 3, **caractérisée en ce que** l'élément (152) s'étend du cadre avant (122) au cadre arrière (126).

5. Nacelle d'aéronef selon l'une quelconque des revendications 1 à 4, **caractérisée en ce que** l'élément (152) forme le cadre avant (122) et s'étend jusqu'au conduit intérieur (116).

6. Nacelle d'aéronef selon l'une quelconque des revendications 1 à 5, **caractérisée en ce que** l'élément (152) forme une partie du cadre arrière (126).

7. Nacelle d'aéronef selon l'une quelconque des revendications 1 à 6, **caractérisée en ce que** l'élément (152) forme le cadre arrière (126) et s'étend jusqu'au conduit intérieur (116).

8. Procédé de réalisation d'un élément (152) formant une partie d'une paroi extérieure (118) d'une nacelle d'aéronef selon l'une quelconque des revendications 1 à 7, ladite nacelle comprenant d'une part une lèvre (114) prolongée à l'intérieur de la nacelle par une paroi intérieure (116) délimitant un conduit débouchant au niveau d'une motorisation (112) et à l'extérieur de la nacelle par la paroi extérieure (118), et d'autre part, un premier cadre dit cadre avant (122) reliant la paroi intérieure (116) et la paroi extérieure (118) délimitant avec la lèvre (114) un conduit annulaire (124) et un second cadre dit cadre arrière (126) reliant la paroi intérieure (116) et la paroi extérieure (118) à proximité de la motorisation (112), **caractérisée en ce que** l'élément (152) est réalisé en matériau composite et obtenu par drappage de plis de fibres sur un moule (160) avec au moins une forme en saillie formant une marche (162) qui correspond à un décrochement (154) et dont la hauteur H est adaptée à l'épaisseur d'un panneau formant la lèvre (114).

## Patentansprüche

1. Flugzeuggondel, die einerseits einen Wulst (114) aufweist, der im Inneren der Gondel durch eine Innenwand (116) verlängert ist, die eine im Bereich einer Motorisierung (112) mündende Führung begrenzt, und der auf der Außenseite der Gondel durch eine Außenwand (118) verlängert ist, und die andererseits einen ersten Rahmen, den sogenannten vorderen Rahmen (122), umfasst, der die Innenwand (116) und die Außenwand (118) verbindet und der zusammen mit dem Wulst (114) einen ringförmigen Kanal (124) begrenzt, und einen zweiten Rahmen, den sogenannten hinteren Rahmen (126), der die Innenwand (116) und die Außenwand (118) in der Nähe der Motorisierung (112) verbindet, **dadurch gekennzeichnet, dass** diese wenigstens eine Verbindungszone (146, 148) aufweist, die im Bereich wenigstens eines Schnittes der Gondel entlang einer die Längsachse (113) der Gondel enthaltenen Ebene ein Element (152) umfasst, das wenigstens einen Teil der Außenwand (118) und wenigstens einen Teil des vorderen Rahmens (122) bildet und das einen Einzug (154) aufweist, dessen Formen zur Aufnahme einer den Wulst (114) bildenden Platte ausgebildet sind.

2. Flugzeuggondel nach Anspruch 1, **dadurch gekennzeichnet, dass** ein Teil des Elements (152) einen Teil des hinteren Rahmens (126) bildet und einen Einzug (154) aufweist, dessen Formen zur Aufnahme einer Platte ausgebildet sind, die neben der Motorisierung im Bereich der Außenwand angeordnet ist.

3. Flugzeuggondel nach Anspruch 1 oder 2, **dadurch gekennzeichnet, dass** sich ein Teil des Elements (152) über eine Höhe, die wenigstens 10% von wenigstens einem der beiden Rahmen (122, 126) entspricht, in eine Richtung erstreckt, die sich mit der Längsachse (113) der Gondel schneidet.

4. Flugzeuggondel nach Anspruch 2 oder 3, **dadurch gekennzeichnet, dass** sich das Element (152) vom vorderen Rahmen (122) zum hinteren Rahmen (126) erstreckt.

5. Flugzeuggondel nach einem der Ansprüche 1 bis 4,
**dadurch gekennzeichnet, dass** das Element (152) den vorderen Rahmen (122) bildet und sich bis zur inneren Führung (116) erstreckt.

6. Flugzeuggondel nach einem der Ansprüche 1 bis 5,
**dadurch gekennzeichnet, dass** das Element (152) einen Teil des hinteren Rahmens (126) bildet.

7. Flugzeuggondel nach einem der Ansprüche 1 bis 6,
**dadurch gekennzeichnet, dass** das Element (152) den hinteren Rahmen (126) bildet und sich bis zur inneren Führung (116) erstreckt.

8. Verfahren zur Herstellung eines Elements (152), das einen Teil einer Außenwand (118) einer Flugzeuggondel nach einem der Ansprüche 1 bis 7 bildet, wobei die Flugzeuggondel einerseits einen Wulst (114) aufweist, der im Inneren der Gondel durch eine Innenwand (116) verlängert ist, die eine im Bereich einer Motorisierung (112) mündende Führung begrenzt, und der auf der Außenseite der Fluggondel durch eine Außenwand (118) verlängert ist, und die andererseits einen ersten Rahmen, einen sogenannten vorderen Rahmen (122) aufweist, der die Innenwand (116) und die Außenwand (118) verbindet und zusammen mit dem Wulst (114) einen ringförmigen Kanal (124) bildet, und einen zweiten Rahmen, den sogenannten hinteren Rahmen (126), der die Innenwand (116) und die Außenwand (118) in der Nähe der Motorisierung (112) verbindet, **dadurch gekennzeichnet, dass** das Element (152) aus einem Verbundmaterial hergestellt ist und durch die Ablage von Faserschichten in einer Form (160) hergestellt ist, die wenigstens eine vorspringende Gestalt aufweist, die eine Stufe (162) bildet, die einem Einzug (154) entspricht und dessen Höhe H an die Dicke der Platte angepasst ist, die den Wulst (114) bildet.

## Claims

1. Aircraft nacelle that comprises, on the one hand, a lip (114) that is extended inside the nacelle by an inside wall (116) that delimits a pipe that empties at a power plant (112) and outside of the nacelle by an outside wall (118), and, on the other hand, a first frame called a front frame (122) that connects the inside wall (116) and the outside wall (118), delimiting an annular pipe (124) with the lip (114), and a second frame called a rear frame (126) that connects the inside wall (116) and the outside wall (118) close to the power plant (112), **characterized in that** it comprises at least one junction zone (146, 148) with - at at least one cross-section of the nacelle along a plane that contains the longitudinal axis (113) of the nacelle - an element (152) that constitutes at least one part of the outside wall (118) and at least one part of the front frame (122) and that comprises an offset (154) whose shapes are suitable for accommodating a panel that forms the lip (114).

2. Aircraft nacelle according to Claim 1, wherein a part of the element (152) constitutes a part of the rear frame (126) and comprises an offset (154) whose shapes are suitable for accommodating a panel that is located facing the power plant at the outside wall.

3. Aircraft nacelle according to Claim 1 or 2, wherein a part of the element (152) extends in a direction that is secant with the longitudinal axis (113) of the nacelle over a height that corresponds to at least 10% of at least one of the two frames (122, 126).

4. Aircraft nacelle according to Claim 2 or 3, wherein the element (152) extends from the front frame (122) to the rear frame (126).

5. Aircraft nacelle according to any of Claims 1 to 4, wherein the element (152) forms the front frame (122) and extends up to the inside pipe (116).

6. Aircraft nacelle according to any of Claims 1 to 5, wherein the element (152) forms a part of the rear frame (126).

7. Aircraft nacelle according to any of Claims 1 to 6, wherein the element (152) forms the rear frame (126) and extends up to the inside pipe (116).

8. Process for the production of an element (152) that forms a part of an outside wall (118) of an aircraft nacelle according to any of Claims 1 to 7, whereby said nacelle comprises, on the one hand, a lip (114) that is extended inside the nacelle by an inside wall (116) that delimits a pipe that empties at a power plant (112) and outside of the nacelle by the outside wall (118), and, on the other hand, a first frame called a front frame (122) that connects the inside wall (116) and the outside wall (118) that delimits an annular pipe (124) with the lip (114), and a second frame called a rear frame (126) that connects the inside wall (116) and the outside wall (118) close to the power plant (112), wherein the element (152) is made of composite material and obtained by draping folds of fibers on a mold (160) with at least one projecting form forming a progression (162) that corresponds to an offset (154) and whose height H is adapted to the thickness of a panel that forms the lip (114).
